# EUROPEAN PATENT APPLICATION

(11) **EP 0 607 831 A2**
(43) Date of publication of application: **27.07.1994**
(21) Application number: 94100240.4
(22) Date of filing: 10.01.1994
(51) Int. Cl.: A47B 47/00, F16B 12/26, F16B 12/10, A47B 87/02, B65D 11/18

(54) **Modular storage unit**

(30) Priority: 08.01.1993 US 1833; 18.06.1993 US 79469
(71) Applicant: SELFIX, INC., Chicago, IL 60632 (US)
(72) Inventor: Hunter, Thomas, Marshall, Michigan 49068 (US)
(74) Representative: Strehl Schübel-Hopf Groening & Partner

(57) **Abstract**

A modular storage unit (30) comprises a pair of laterally spaced, parallel end panels (32) and at least one insert panel (34) positionable between the end panels (32). Each of the end panels (32) has an inwardly facing expansive surface (46), and plural corners thereon, and an integral corner arrangement (54) disposed at each of the plural corners. The corner arrangement (54) defines a pair of partition surfaces (56, 58) intersecting said expansive surfaces of the end panel (32), with the partition surfaces (56, 58) being arranged transverse to each other, and in spaced-apart confronting relationship to a partition surface of an adjacent corner arrangement (54) to define a side marginal portion (60) between the spaced-apart confronting partition surfaces. Each insert panel (34) extends laterally between the respective side marginal portions (60) of the pair of end panels (32). A plurality of locking elements (40) attach each insert panel (34) between the pair of end panels (32). Each of the locking elements (40) comprises a locking projection (42) disposed on either one of the insert panel (34) or the end panel (32), and a projection receiving slot (44) disposed on the other of the insert panel (34) and the end panel (32) for releasably, lockingly receiving said locking projection (42).

## Description

### Field Of The Invention

The present invention relates to modular storage units, and more particularly to modular storage units including at least one insert panel lockingly positionable between laterally spaced, parallel end panels.

### Background Of The Invention

Modular storage units, such as modular storage boxes, are economically advantageous over unitary or integral storage boxes in that they are readily disassembled into their individual modular elements for the compact storage and shipping thereof. As a result, a wide variety of modular storage box constructions have been proposed and developed.

One example of such modular constructions is the use of tongue-slot connection of plural plates. For example, a pair of end panels respectively have I-shaped or T-shaped slots for receiving I-shaped or T-shaped projections or tongues on side panels and/or a bottom panel. Such constructions however require separate connectors such as bolts to connect them together and prevent separation from each other.

Another example of such constructions is a combination of plural plates and separate connector members. Such separate connectors may include vertical and horizontal slots or channels for receiving end portions of the plural plates. Additional fasteners such as bolts are usually employed to tightly connect the separate connectors and the plural plates together. However, such constructions involve the increased number of components which adds to the cost thereof, and also to the increased number of assembly steps which complicates the assembly and may require the use of tools such as screw drivers and wrenches.

More recently, constructions have been proposed which do not require separate connector members. Each of a pair of side panels is combined to each of a pair of end panels through tongue-slot connection. Each of the side and end panels has projections configured to be lockingly received by the locking cavities formed in a bottom panel and/or a top panel. Such construction therefore requires at least three different elements in order to assemble one storage box.

It would be desirable, therefore, to provide a modular storage unit which can be easily and quickly assembled from lesser number of different modular elements.

### Summary Of The Invention

The modular storage unit, typically a box, in accordance with the present invention comprises a pair of laterally spaced, parallel end panels. Each of the end panels has an inwardly facing expansive surface and plural corners thereon, and an integral corner arrangement disposed at each of the plural corners. The corner arrangement defines a pair of partition surfaces intersecting said expansive surfaces of the end panel, with the partition surfaces being arranged transverse to each other, and each in spaced-apart confronting relationship to a partition surface of an adjacent corner arrangement to define a side marginal portion between the spaced-apart confronting partition surfaces.

The modular storage unit further comprises one or a plurality of insert panels positionable between the end panels. Each of the insert panels extends laterally between respective side marginal portions of a pair of end panels. A plurality of locking elements provide for attaching each the insert panels to the end panels. Each of the locking elements comprises a locking projection disposed on either the insert panel or the end panel, and a projection receiving slot disposed on the other of the insert panel and the end panel for releasably, lockingly receiving said locking projection.

In accordance with one embodiment of the present invention, each of the insert panels has first and second opposite surfaces, and each of the locking elements is configured to releasably lock each of the insert panels to each of the end panels for selective outwardly facing positions of the insert panel so that either one of the first and second surfaces of the insert panel can be selected to face outwardly.

In a particular embodiment of the present invention, each of the corner arrangements comprises a pair of upright tabs transverse to each other and extending upwardly from the inwardly facing surface of the end panel. Each of the upright tabs may include the projection receiving slot for receiving the locking projection disposed on the insert panel. The insert panel may comprise a flexible plate having opposite lateral ends and an integral rim flange depending from each of the opposite lateral ends to include the locking projection on the integral rim flange. In the illustrated embodiment, each of the integral rim flanges has an outside surface to include two laterally spaced, longitudinally staggered locking projections respectively extending normally from the outside surface thereof.

The present invention further provides a modular storage unit which comprises a pair of laterally spaced, parallel end panels. Each of the end panels has an inwardly facing expansive surface and includes a pair of partitions intersecting the expansive surface. The pair of partitions are arranged in spaced-apart confronting relationship to each other. The unit further comprises an insert panel which has opposite side edge portions each positionable between the pair of partitions on the respective end panel. A plurality of locking elements provide for attaching the insert panel between the pair of end panels. Each of the locking elements comprises a locking projection disposed on either the insert panel or the end panel and a projection receiving slot disposed on the other of the insert panel and the end panel for releasably and lockingly receiving the locking projection.

In another aspect of the present invention, there is provided a stackable modular storage unit. The unit comprises a first pair of laterally spaced, parallel end panels. Each end panel has a bottom end surface for defining a longitudinally extending, bottom end surface. A set of laterally spaced projections are disposed on the bottom end surface. Each of projections has an inner surface for defining a longitudinally extending, and laterally inwardly opening receiving channel. Each end panel has a top end surface for defining a longitudinally extending, top end surface. The top end surface has a set of slots respectively extending laterally inwardly from opposite lateral edges of the top end surface for defining a set of laterally spaced insertion portions.

The modular unit further comprises a second pair of laterally spaced, parallel end panels. The insertion portions of one pair of end panels are respectively configured to slidably fit into the receiving channels of the other pair, so that the one pair of end panels are respectively stacked onto the other pair of end panels, with the top end surfaces of the lower pair of end panels respectively being in abutment contact with the bottom end surfaces of the upper pair of end panels. The modular unit further comprises at least one insert panel positionable to extend laterally between either or both of the two sets of end panels.

While the present invention is susceptible of embodiment in various forms, there is shown in the drawings, and will be hereinafter described, a preferred embodiment of the invention and one or more alternative embodiments thereof with the understanding that the present disclosure is to be considered as an exemplification of the principles of the invention and is not intended to limit the invention to the specific embodiments illustrated.

### Brief Description Of The Drawings

FIGURE 1 is a plan view of one embodiment of an end panel in accordance with the present invention;
FIGURE 2 is a side elevational view partly in cross-section of the end panel of FIGURE 1;
FIGURE 3 is a plan view of one embodiment of an insert panel in accordance with the present invention;
FIGURE 4 is a side elevational view of the insert panel of FIGURE 3;
FIGURE 5 is a partial perspective view of the end and insert panels of FIGURES 1 - 4 illustrating one orientation thereof before assembly;
FIGURE 6 is a partial plan view of the end and insert panels of FIGURE 5 after assembly, with the insert panel cross-sectioned;
FIGURE 7 is a partial perspective view of the end and insert panels of FIGURES 1 - 4 illustrating another orientation thereof before assembly;
FIGURE 8 is a partial plan view of the end and insert panels of FIGURE 7 after assembly, with the insert panel cross-sectioned;
FIGURE 9 is an exploded perspective view of the stackable modular storage unit in accordance with the present invention in the form of a;
FIGURE 10 is a perspective view of modular storage units in accordance with the present invention in the form of stacked modular storage boxes which are hung up by hanger brackets on a support rod;
FIGURE 11 is a perspective view of a variation of the stacked modular storage boxes of FIGURE 10, with another modular storage box and rod formed adjacent thereto;
FIGURE 12 is a plan view of another embodiment of an end panel in accordance with the present invention;
FIGURE 13 is a side elevational view of the end panel of FIGURE 12;
FIGURE 14 isa a plan view of another embodiment of an insert panel attachable to the end panel of FIGURE 12 in accordance with the present invention;
FIGURE 15 is a side elevational view of the insert panel of FIGURE 14;
FIGURE 16 is a partial perspective view of the end and insert panels of FIGURES 12 - 15 illustrating one orientation thereof before assembly;
FIGURE 17 is a partial plan view of the end and insert panels of FIGURE 16 after assembly, with the insert panel cross-sectioned;
FIGURE 18 is a partial perspective view of the end and insert panels of FIGURES 12 - 15 illustrating another orientation thereof before assembly;
FIGURE 19 is a partial plan view of the end and insert panels of FIGURE 18 after assembly, with the insert panel cross-sectioned;
FIGURE 20 is a perspective view of another embodiment of a modular storage box arrangement in accordance with the present invention;
FIGURE 21 is a top plan view of one embodiment if a lid in accordance with the present invention;
FIGURE 22 is a front end view of the lid of FIGURE 21;
FIGURE 23 is a side elevational view of the lid of FIGURE 21 which is attached to a top end of the end panel of FIGURE 12;
FIGURE 24 is a rear view of another embodi ment of a kick panel in accordance with the present invention;
FIGURE 25 is a front view of the kick panel of FIGURE 24;
FIGURE 26 is a top view of the kick panel of FIG-U RE 24;
FIGURE 27 is a side elevational view of the kick panel of FIGURE 24;
FIGURE 28 is an enlarged partial perspective view illustrating the stacking projections on an upper end panel, and the respective receiving slots on a lower end panel;
FIGURES 29 and 30 are cross-sectional views taken along lines 29-29 and 30-30 of FIGURE 28, respectively; and
FIGURES 31 and 32 are perspective views respectively illustrating the attachment of a caster bracket to the end panel.

### Detailed Description

While the present invention is susceptible of embodiment in various forms, there is shown in the drawings and will hereinafter be described various presently preferred embodiments of the invention, with the understanding that the present disclosure is to be considered as an exemplification of the invention, and is not intended to limit the invention to the specific embodiments illustrated and described herein.

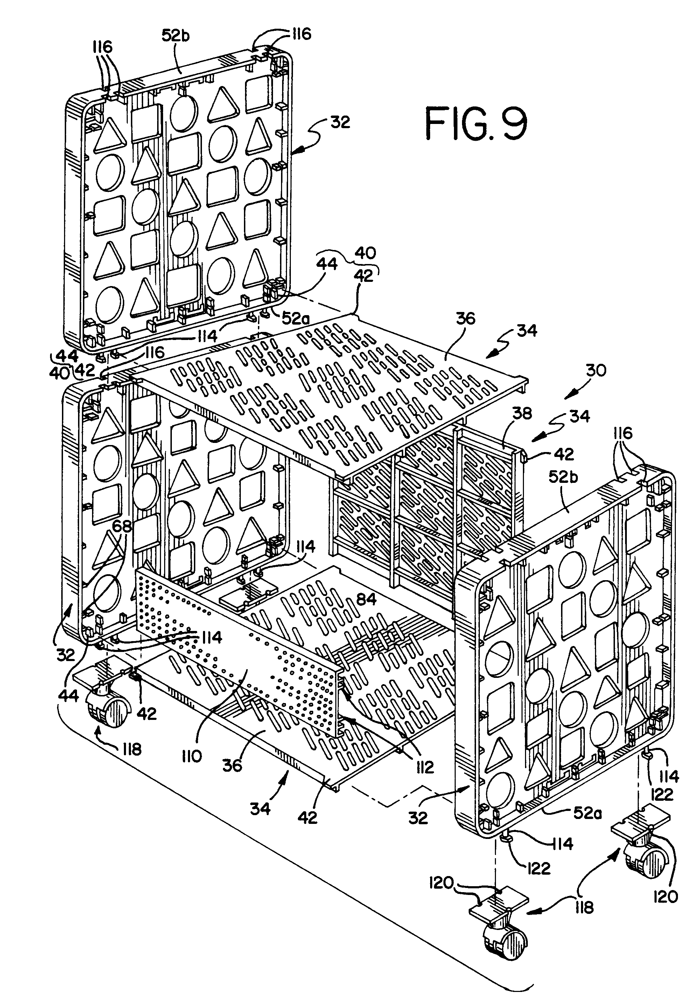

Referring now to the drawings, therein is generally illustrated in FIGURE 9, a modular storage unit in the form of storage box 30 embodying the principles of the present invention.

The modular storage box 30 as illustrated comprises a pair of substantially identical laterally spaced, generally rectangular, parallel end panels 32, and a plurality of substantially identical generally rectangular insert panels 34 positionable between the pairof parallel end panels 32. The insert panels 34 are illustrated in FIGURE 9 as being a bottom panel 36 and a side panel 38 which respectively laterally extends between the pair of parallel end panels 32.

The components of the modular storage box 30 further include a plurality of locking elements 40 for attaching each one of the insert panels 34 between a pair of end panels 32. Each of the locking elements 40 comprises a locking projection 42 and a projection receiving slot 44 for releasably, lockingly receiving the locking projection 42. The locking projection 42 may be disposed on either the insert panel 34 or the end panel 32, and the projection receiving slot 44 may be disposed on the other. In the illustrated embodiment, the locking projection 42 of each of the locking elements 40 is disposed on the insert panel 34. The corresponding projection receiving slot 44 is disposed on the end panel 32.

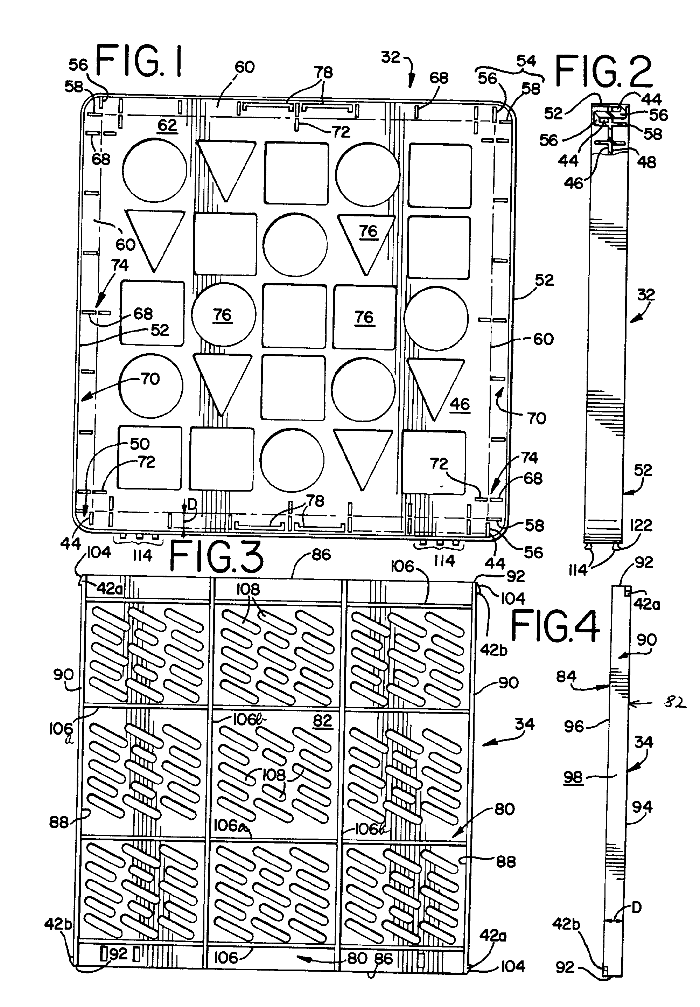

Referring also to FIGURES 1 and 2, the end panel 32 has opposed expansive surfaces, i.e., an inwardly-facing surface 46 and an outwardly-facing surface 48, respectively, and includes four corners 50 thereon. The end panel 32 further includes a peripheral flange 52 which extends normally from each of the inwardly-facing and outwardly-facing surfaces 46, 48. In the illustrated embodiment, an inwardly-facing construction of the end panel 32 is substantially identical to an outwardly-facing construction thereof. Accordingly, only the inwardly-facing construction of the end panel 32 will be discussed in detail hereinafter.

The end panel 32 includes an integral corner arrangement 54 disposed at each of the four corners 50 on the inwardly-facing surface 46. Each corner arrangement 54 defines a pair of vertical and horizontal partition surfaces 56, 58 oriented transverse to each other and extending normally from the inwardly facing surface 46. In the illustrated embodiment, in each of the corner arrangements 54 the vertical and horizontal partition surfaces 56, 58 take the form of vertical and horizontal upright tabs integrally formed on the end panel 32 to extend normally from the inwardly-facing surface 46 of the end panel 32.

The vertical partition surface or tab 56 in each corner arrangement 54 is in spaced-apart confronting relationship to a vertical partition surface 56 or tab of an adjacent corner arrangement 54; and the horizontal partition surface or tab 58 in each corner arrangement 54 is in spaced-apart confronting relationship to a horizontal partition surface or tab 58 of the other adjacent corner arrangement 54 to define a generally rectangular side marginal portion 60 between the spaced-apart confronting partition surfaces 56, 58.

Thus, the vertical partition surface 56 of any one of the corner arrangements 54 is positioned in spaced apart, parallel confronting relationship to a vertical partition surface 56 of the horizontally adjacent corner arrangement 54 to define a horizontally extending side marginal portion 60 therebetween. Likewise, the horizontal partition surface 58 of any one of the corner arrangements 54 is positioned in spaced apart, parallel confronting relationship to a horizontal partition surface 58 of the vertically adjacent corner arrangement 54 to define a vertically extending side marginal portion 60 therebetween. Accordingly, there are defined on the inwardly-facing surface 46 four side marginal portions 60 which combine to surround and define a generally rectangular or square central surface 62.

In the illustrated embodiment, one tab of each pair of opposed vertical and horizontal upright tabs 56, 58 has a fixed end connected or fixed to the peripheral flange 52, and a free end extending inwardly from the peripheral flange 52. The other tab of each pair of the vertical and horizontal upright tabs 56, 58 is inwardly spaced from the peripheral flange 52 to have an inner free end extending transverse to the fixed upright tab. The innerfree end of the free upright tab is positioned substantially coterminous to the partition surface defined by the fixed upright tab. Each of the fixed upright tabs is positioned in spaced-apart confronting relationship to a free upright tab of an adjacent corner arrangement 54, with the free upright tab inwardly offset from the fixed upright tab. The fixed and free upright tabs positioned in spaced-apart confronting relationship respectively have projection receiving slots 44 vertically or horizontally spaced from each other a predetermined distance D.

As seen from FIGURE 2, the free vertical upright tab 56 on the inwardly facing surface 46 is integrally formed with the fixed vertical upright tab 56 on the outwardly facing surface 48. Likewise, any one of vertical or horizontal fixed upright tabs 56, 58 on one of the surfaces 46, 48 may be integrally formed with respective one of the vertical or horizontal free upright tabs 56, 58 on the other of the surfaces 46, 48.

The end panel 32 further includes one or more retaining channels extending along each of the side marginal portions 60. In the illustrated embodiment, a plurality of retaining tabs are arranged in two parallel rows along each of the side marginal portions 60. Outer retaining tabs 68 (seven shown) arranged in an outer row are inwardly spaced from and positioned along a line parallel to the peripheral flange 52 to define an outer retaining channel 70 therebetween. Inner retaining tabs 72 (three shown) arranged in an inner row are inwardly spaced from outer retaining tabs 68 and are positioned along a line parallel to the peripheral flange 52 to define an inner retaining channel 74 between tabs 68, 72.

The end panel 32 is further provided with decorative openings 76 of various shape patterns to define windows through which a person can see inside an assembled modular storage box 30. The end panel 32 also includes upper and lower locking openings 78 for receiving hook members of any auxiliary element such as a hanger bracket as will be described hereinafter.

Referring further to FIGURES 3 and 4, the insert panel 34 includes a rectangular, relatively thin resiliently flexible plate 80 which has opposite first and second expansive planar surfaces 82, 84, opposite parallel lateral ends 86 and opposite parallel longitudinal ends 88. The insert panel 34 further includes a pair of integral rim flanges 90 extending along each of the opposite longitudinal ends 88. The rim flanges 90 terminate in lateral ends 92 coterminous to respective lateral ends 86 of the flexible plate 80. Each of the integral rim flanges 90 has a distal end 94 extending normally from the first expansive planar surface 82 of the flexible plate 80, and a proximal end 96 coterminous to the second expansive planar surface 84 of the flexible plate 80 to define a generally rectangular outside surface 98 therebetween.

Each of the outside surfaces 98 of the integral rim flanges 90 has two laterally spaced, longitudinally- staggered locking projections 42 respectively extending normally therefrom and configured to be releasably and lockingly received by the projection receiving slot 44 provided in each of the upright tabs 56, 58 on the end panel 32.

As best illustrated in FIGURE 4, one of the locking projections 42 is disposed adjacent one of the opposite lateral ends 92 of the integral rim flange 90 to provide a distal locking projection 42a. The distal locking projection 42a has corner surfaces extending conterminously to the distal end 94 and the one of the opposite lateral ends 92 of the integral rim flange 90, respectively.

Another locking projection 42b is disposed adjacent the other of the opposite lateral ends 92 of the integral rim flange 90 to provide a proximal locking projection. The proximal locking projection 42b has corner surfaces extending conterminously to the proximal end 96 and the other of the opposite lateral ends 92 of the integral rim flange 90, respectively.

In this embodiment, the insert panel 34 has along each lateral end the proximal locking projection 42b on one integral rim flange 90 and the distal locking projection 42a on the other integral rim flange 90, with the two locking projections 42a, 42b spaced from each other in a direction normal to the first and second expansive planar surfaces 82, 84 by a predetermined distance D corresponding to the vertical or horizontal spacing of the spaced-apart confronting vertical or horizontal upright tabs 56, 58 on the end panel 32. Each of the proximal and distal locking projections 42a, 42b has a tapered surface 104 converg- ingly extending toward the corresponding lateral end of the insert panel 34.

One or more rigidifying elements can be provided on the first expansive planar surface 82 to provide the insert panel 34 with suitable rigidity. In the illustrated embodiment, four parallel, longitudinally-extending rigidifying cross ribs 106a are integrally formed with the first expansive planar surface 82 and extend generally transverse thereto and between the opposite rim flanges 90. Two additional parallel, laterally-extending rigidifying cross ribs 106b are further integrally formed on the first expansive planar surface 82 to extend generally transverse to and between the opposite lateral ends 86 of the flexible plate 80.

The insert panel 34 is further provided with openings 108 of arbitrary shape patterns in regions defined by the transversely intersecting cross rims 106 to provide windows through which a person can see inside an assembled modular storage box 30.

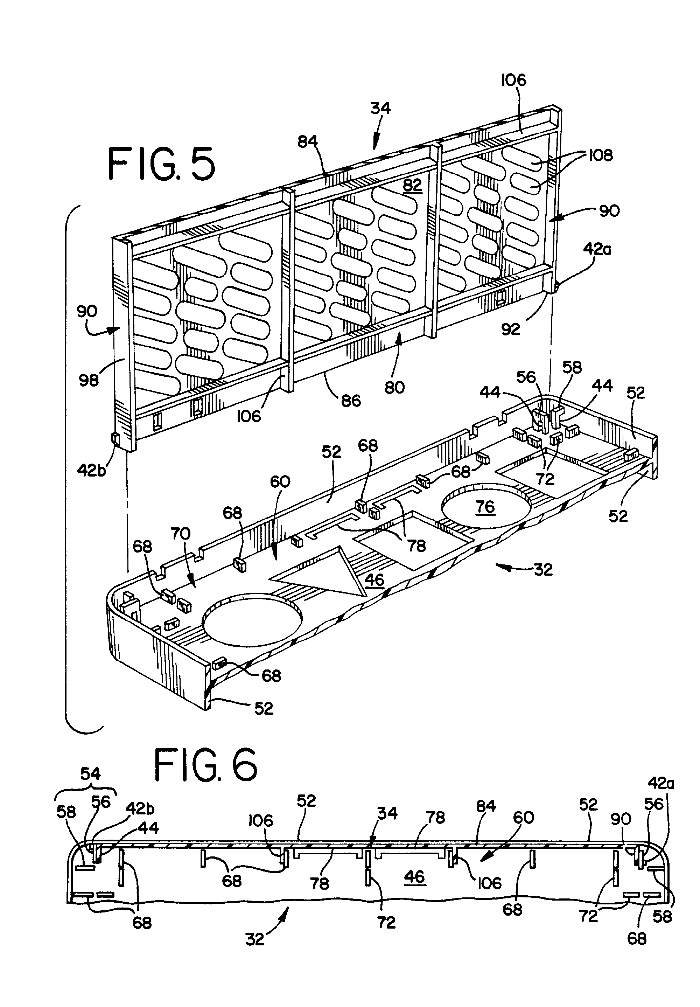

FIGURES 5 and 6 illustrate the attachment of the insert panel 34 to the end panel 32 wherein the insert panel 34 is oriented relative to the end panel 32 such that the second expansive planar surface 84 of the insert panel 34 faces outwardly. The lateral end of the insert panel 34 is directed toward the side marginal portion 60 on the end panel 32 as shown in FIGURE 5. The lateral end 86 of the flexible plate 80 is inserted in the outer retaining channel 70 defined between the row of outer retaining tabs 68 and the peripheral flange 52 on the end panel 32. The proximal locking projection 42b on the insert panel 34 is releasably and lockingly fitted into the projection receiving slot 44 formed in the fixed vertical upright tab 56 (or horizontal upright tab 58) of a corner arrangement 54 on the end panel 32. The distal locking projection 42a on the insert panel 34 is releasably and lockingly fitted into the projection receiving slot 44 formed in the free vertical upright tab 56 (or horizontal upright tab 58) of the adjacent corner arrangement 54 horizontally (or vertically) spaced from the fixed vertical upright tab 56 (or the fixed horizontal upright tab 58) along the peripheral flange 52. As a result of the attachment, the lateral end of the insert panel 34 is lockingly placed on the side marginal portion 60 of the inwardly facing surface 46 of the end panel 32, as illustrated in FIGURE 6.

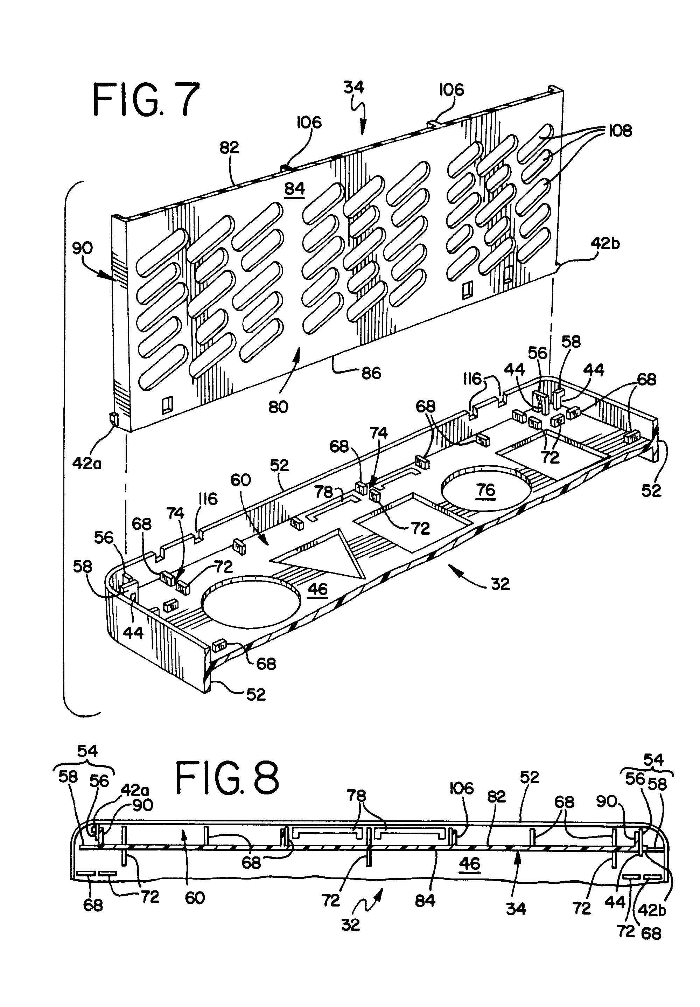

FIGURES 7 and 8 illustrate the attachment of the insert panel 34 to the end panel 32 wherein the insert panel 34 is oriented relative to the end panel 32 such that the first expansive planar surface 82 of the insert panel 34 faces outwardly, a reversed surface orientation from FIGURE 5 and 6. The lateral end of the insert panel 34 is likewise directed toward the side marginal portion 60 on the end panel 32 as shown in FIGURE 7. The lateral end 86 of the flexible plate 80 is inserted in the inner retaining channel 74 defined between the row of the inner retaining tabs 72 and the row of the outer retaining tabs 68. The distal locking projection 42a on the insert panel 34 is releasably and lockingly fitted into the projection receiving slot 44 in the fixed vertical upright tab 56 of one corner arrangement 54 on the end panel 32. The proximal locking projection 42b on the insert panel 34 is releasably and lockingly fitted into the projection receiving slot 44 formed in the free vertical upright tab 56 of the horizontally adjacent corner arrangement 54 spaced from the fixed vertical upright tab 56 along the peripheral flange 52. As a result of the attachment, the lateral end of the insert panel 34 is lockingly placed on the side marginal portion 60 of the inwardly facing surface 46 of the end panel 32, as illustrated in FIGURE 8.

As appreciated from the foregoing description, the illustrated construction enables the insert panel 34 to be reversibly attached to either of the inwardly-facing and outwardly-facing surfaces 46, 48 of the end panel 32.

FIGURE 9 is an exploded perspective view of one storage unit arrangement. Two of the insert panels 34 are positioned between the pair of laterally spaced, parallel end panels 32 to form the bottom panel 36 and the rear side panel 38. The bottom panel 36 is positioned such that its second expansive planar surface 84 faces inwardly to provide a flat bottom surface. The rear side panel 38 is positioned such that its second expansive planar surface 84 faces outwardly. Such surface orientation of the insert panels 36, 38 may be optionally reversed.

A generally rectangular kick panel 110 is positioned between the pair of laterally spaced end panels 32 to form a front side portion of the modular storage box 30, although another insert panel 34 may be positioned to form a front side panel. The kick panel 110 is dimensioned to be vertically shorter than the end panels 32 to provide a front access space there- above through which a user may place articles in and remove articles from the modular storage box 30. The kick panel 110 has at each of its opposite lateral ends one or more laterally extending open channels 112 which are configured to receive at least the outer retaining tabs 68 on each of the pair of the end panels 32. Each lateral end of the kick panel 110 is dimensioned to be inserted and retained in the outer retaining channel 70 defined between the row of the outer retaining tabs 68 and the peripheral flange 52 on the end panel 32.

The modular storage box 30 of the present invention is constructed as being stackable. In the embodiment as illustrated in FIGURE 9, each of the end panels 32 has a plurality of legs or stacking projections 114 on its bottom peripheral flange 52a for extending vertically downwardly therefrom. Each of the end panels 32 also has a plurality of receiving slots 116 on its top peripheral flange 52b for releasably receiving the stacking projections 114.

Specifically, a first set of three stacking projections 114 are disposed toward the front side panel, and a second set of three stacking;projections 114 are spaced from the first set toward the rear side panel 38 along the bottom peripheral flange 52a. Likewise, first and second sets of three receiving slots 116 are positioned on the top peripheral flange 52b in vertical alignment with respective first and second sets of three stacking projections 114 on the bottom peripheral flange 52a. A plurality of end panels 32 are thus stackable in vertical alignment with each other through connections of the stacking projections 114 and respective receiving slots 116, and the desired number of the insert panels 34 may be attached to each of the stacked end panels 32. In FIGURE 9, another bottom panel 36 is shown to be attached to the stacked end panel 32.

The modular storage box 30 or modular storage unit arrangement may be supported by a plurality of caster brackets 118. Each of the caster brackets has a set of three receiving slots 120 configured to receive one set of three stacking projections 114 placed on the bottom peripheral flange 52a of the end panel 32. In the illustrated embodiment, the bottom modular storage box 30 of the modular storage box arrangement is supported by four caster brackets 118, with two of them supporting each of the end panels 32.

Each of the stacking projections 114 is illustrated as having at its distal end a hook portion 122 for being resiliently lockingly received by receiving slots 116, 120 of the end panel 32 or the caster bracket 118, although the hook portion 122 could be optionally omitted.

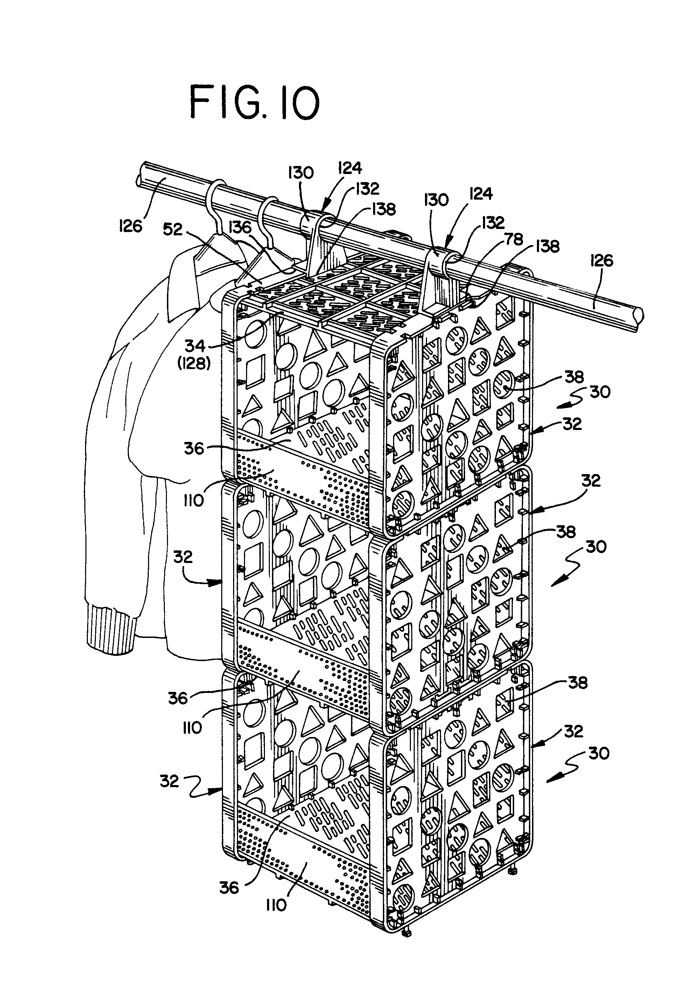

FIGURE 10 is a perspective view of another storage box arrangement. Three of the modular storage boxes 30 are stacked together in vertical alignment with each other, and are hung up in the air by hanger brackets 124 mounted on a support rod 126. Each of the three modular storage boxes include the pair of laterally spaced, parallel end panels 32, the bottom panel 36, the rear side panel 38 and the front kick panel 110. The top modular storage box 30 further includes an additional insert panel 34 to form a lid 128.

Each of the hanger brackets 124 has a gripping arm 130 defining a cylindrical cavity 132 for slidably and pivotally receiving and gripping the support rod 126. Each of the hanger brackets 124 also has a bottom surface 136 and a J-shaped lower jaw portion 138 for defining a resilient U-shaped channel therebetween. The U-shaped channel is dimensioned to receive the top or bottom peripheral flange 52 of the end panel 32. The lower jaw portion 138 is inserted into the upper or lower locking openings 78 of the end panel 32 for locking attachment.

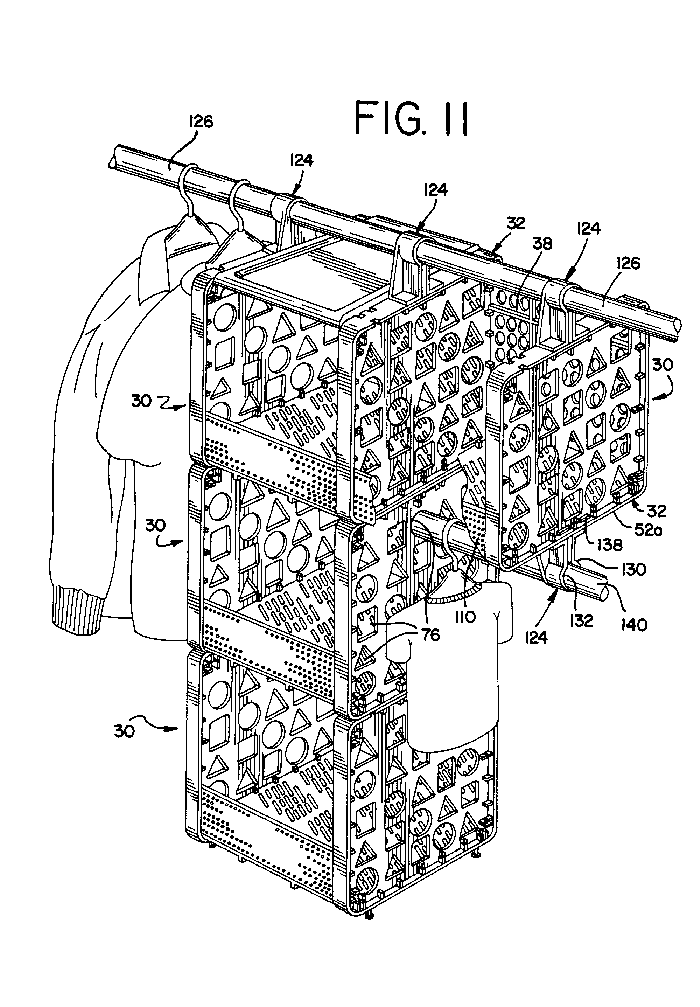

FIGURE 11 is a perspective view of still another modular storage unit arrangement wherein an additional modular storage box 30 is disposed adjacent to and in horizontal alignment with the top modular storage box 30 of the modular storage box arrangement as illustrated in FIGURE 10. An additional end panel 32 is suspended from the support rod 126 by the hanger bracket 124 so as to be laterally spaced from one of the end panels 32 of the top modular storage box 30 as illustrated in FIGURE 10 for positioning additional bottom panel 36, rear side panel 38 and kick panel 110 therebetween.

Another hanger bracket 124 is attached to the bottom peripheral flange 52a to extend downwardly therefrom. Its gripping arm 130 pivotally grips an insert rod 140 which extends through one of the openings 76 formed in the end panel 32 of the middle modular storage box 30 of the three stacked storage box arrangement. The insert rod 140 may serve to support hangers as shown.

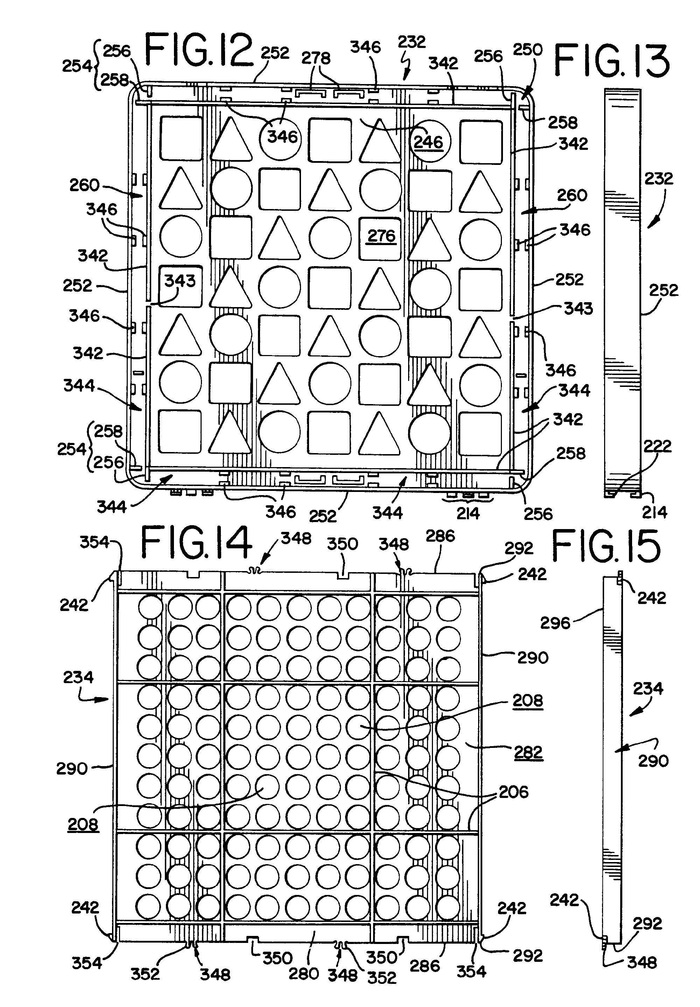

FIGURES 12 and 13 show another embodiment of an end panel 232 in accordance with the present invention. The end panel 232 includes at each of its four corners 250 the integral corner arrangement 254 of the same configuration as that of the first embodiment which comprises the pair of vertical and horizontal upright tabs 256, 258.

A pair of elongated, vertical partition walls 342 are vertically disposed along respective, vertically extending side marginal portions 260, and respectively intersect the inwardly-facing expansive surface 246 of the end panels 232, with the pair of vertical partition walls 342 being arranged in spaced-apart confronting relationship to each other. Each of the vertical partition walls 342 extends vertically in parallel to the peripheral flange 252 for defining a retaining channel 344 therebetween, and is vertically aligned with the respective upper and lower vertical upright tabs 256. Each partition wall 342 may be connected to at least one of the upper and lower vertical upright tabs 256.

In the illustrated embodiment, each vertical partition wall 342 is at its one end connected to the free, vertical upright tab 256, so that a continuous vertical partition is formed to include the free, vertical upright tab 256. The other end of the partition wall 342 is connected to the free, horizontal upright tab 258 so that each of the vertical partition walls 342 is connected between the free, vertical and horizontal upright tabs 256, 258 of the respective adjacent corner arrangements 254. Each of the vertical partition wall 342 may be further extended vertically to connect the fixed, vertical upright tab 256 so that the continuous vertical partition is formed to further include the fixed, vertical upright tab 256.

The end panel 232 further includes a pair of elongated, horizontal partition walls 342 which are respectively horizontally disposed along respective, horizontally-extending side marginal portions 260, and respectively intersect the inwardly-facing expansive surface 246 of the end panel 232, with the pair of horizontal partition walls 342 being arranged in spaced-apart confronting relationship to each other. Each of the horizontal partition walls 342 extends horizontally in parallel to the respective peripheral flange 252 for defining a retaining channel 344 therebetween, and is horizontally aligned with the respective left and right horizontal upright tabs 258. Each horizontal partition wall 342 may be connected to at least one of the left and right horizontal upright tabs 258.

In the illustrated embodiment, each horizontal partition wall 342 is at its one end connected to the free, horizontal upright tab 258, so that a continuous horizontal partition is formed to include the free, horizontal upright tab 256. The other end of the horizontal partition wall 342 is connected to the free, vertical upright tab 256 so that each of the horizontal partition walls 342 is connected between the free, vertical and horizontal upright tabs 256, 258 of the respective adjacent corner arrangements 254. The horizontal partition wall 342 may be further extended horizontally to connect the fixed, horizontal upright tab 258 so that the continuous horizontal partition is formed to further include the fixed, horizontal upright tab 258.

In such construction, the pair of parallel, horizontal partition walls 342 transversely intersect the pair of parallel, vertical partition walls 342 to integrally form a generally rectangular partition wall on the inwardly-facing expansive surface 246 of the end panel 232. One or more of the partition walls 342 may be of about the same height as that of the peripheral flange 252 of the end panel 232. One or more of the vertical and horizontal partition walls 342 may have one or more locking projections or projection receiving slots. In the embodiment as illustrated in FIGURE 12, each of the vertical partition walls 342 has at its center a projection receiving slot 343.

A plurality of receiving slots 346 are disposed in each of the side marginal portion 260 and are arranged in parallel two rows extending within the retaining channel 144. An outer row of the receiving slots 346 are arranged to extend along and adjacent the peripheral flange 252, and an inner row of the receiving slots 346 are arranged to extend along and adjacent the partition wall 342. The outer and inner rows of the receiving slots 346 are vertically or horizontally aligned to each other.

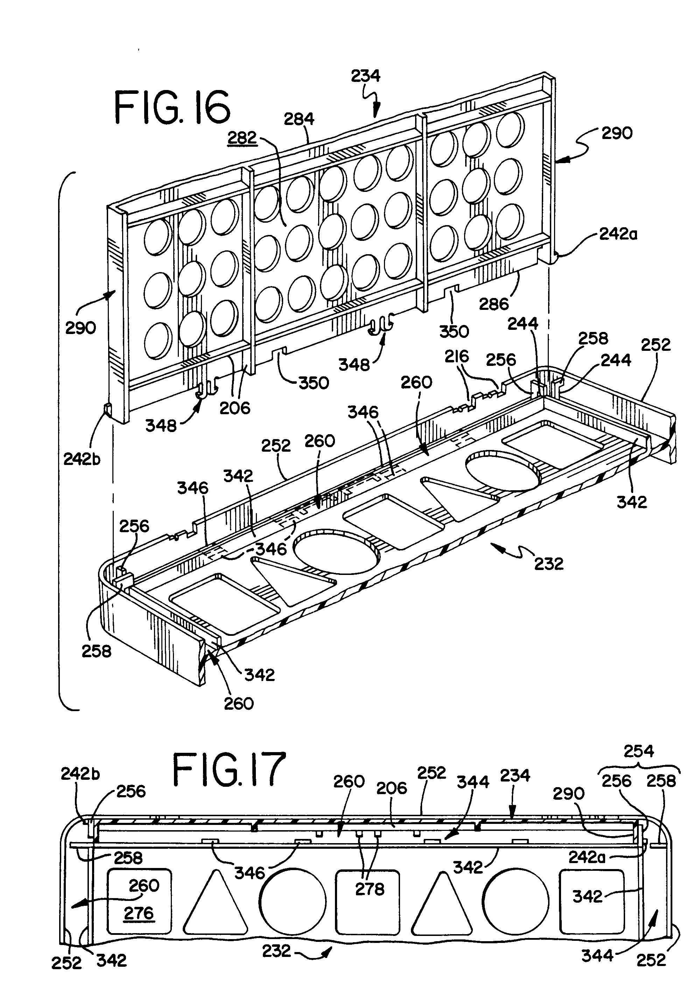

FIGURES 14 and 15 illustrate another embodiment of the insert panel 234 which is designed to be attachable to the end panel 232 of the embodiment shown in FIGURES 12 and 13. The insert panel 234 has along its each lateral end one or more pairs of retaining projections 348 and recesses 350 longitudinally spaced from each other. The retaining projections 348 at one of the lateral ends of the insert panel 234 are respectively aligned with the recesses 350 at the other of the lateral ends. Each of the retaining projections 348 may have one or more J-shaped resilient hook portions 352. The insert panel 234 of this em- bodimentfurther has in its flexible plate 280 a slit 354 laterally extending from each of the lateral ends 286 along each of the proximal ends 296 of the integral rim flanges 290 so as to separate from the flexible plate 280 each of the lateral ends 292 of the integral rim flange 290 on which the locking projection 242 is disposed for providing each of the lateral ends 292 with increased flexibility.

FIGURES 16 and 17 illustrate the attachment of the insert panel 234 of FIGURE 14 to the end panel 32 of FIGURE 12 wherein the insert panel 234 is oriented relative to the end panel 232 such that the second expansive planar surface 284 of the insert panel 234 faces outwardly. One of the lateral ends of the insert panel 234 is directed toward the side marginal portion 260 on the end panel 232 as shown in FIGURE 16. The distal locking projection 242a on one of the integral lateral rim flanges 290 of the insert panel 234 is releasably and lockingly fitted into the projection receiving slot 244 formed in the free vertical upright tab 256 of one of the corner arrangements 254 on the end panel 232. The retaining projections 148 on the lateral end of the insert panel 234 are inserted into respective receiving slots 346 arranged in the outer row on the side marginal portion 260 of the end panel 232. The proximal locking projection 242b on the other of the integral rim flanges 290 of the insert panel 234 is releasably and lockingly fitted into the projection receiving slot 244 formed in the fixed vertical upright tab 256 of adjacent corner arrangements 254 on the end panel 232. As a result of the attachment, the lateral end of the insert panel 234 is lockingly placed on the side marginal portion 260, and is retained in the retaining channel 344 defined between the partition wall 342 and the peripheral flange 252.

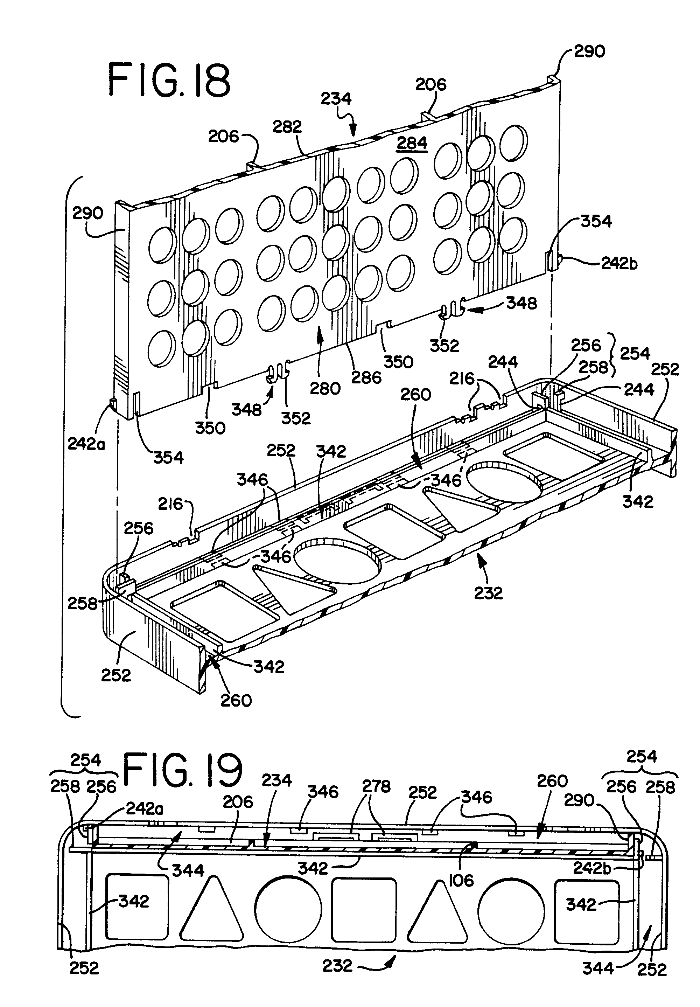

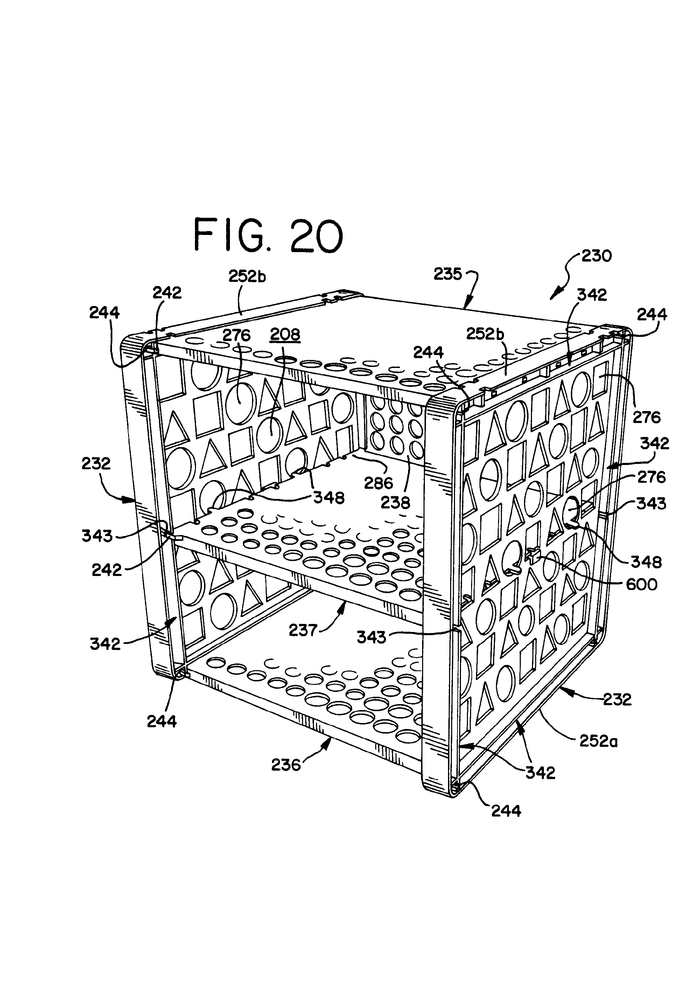

FIGURES 18 and 19 illustrate the attachment of the insert panel 234 of FIGURE 14 to the end panel 232 of FIGURE 12 wherein the insert panel 234 is oriented relative to the end panel 232 such that the first expansive planar surface 282 of the insert panel 234 faces outwardly, reversed from its orientation as shown in FIGURES 16 and 17. One of the lateral ends of the insert panel 234 is directed toward the side marginal portion 260 on the end panel 232 as shown in FIGURE 18. The proximal locking projection 242b on one of the integral lateral rim flanges 290 of the insert panel 234 is releasably and lockingly fitted into the projection receiving slot 244 formed in the free vertical upright tab 256 of one of the corner arrangements 254 on the end panel 232.

The retaining projections 348 on the lateral end of the insert panel 234 are inserted into respective receiving slots 346 arranged in the inner rowon the side marginal portion 260 of the end panel 232. The distal locking projection 242a on the other of the integral rim flanges 290 of the insert panel 234 is releasably and lockingly fitted into the projection receiving slot 244 formed in the fixed vertical upright tab 256 of the adjacent corner arrangements 254 on the end panel 232. As a result of the attachment, the lateral end of the insert panel 234 is lockingly placed on the side marginal portion 260 of the end panel 232, and is retained in the retaining channel 344 defined between the partition wall 342 and the peripheral flange 252 of the end panel 232.

FIGURE 20 is a perspective view of one storage box arrangement, utilizing the end panel and insert panel constructions as illustrated in FIGURES 12 through 15. Three of the insert panels 234 are positioned between the pair of laterally spaced, parallel end panels 232 to form a top panel 235, a bottom panel 236, and a rearside panel 238. Another insert panel 234 is positioned between the pair of laterally spaced, end panels 232 to form an intermediate partition panel 237. In this embodiment, each of the vertical partition walls 342 on the respective end panel 232 extends continuously vertically between a top peripheral flange 252b and a bottom peripheral flange 252a, and has top and bottom projection receiving slots 242 and the central projection receiving slot 343 arranged at vertical intervals. The top and bottom projection receiving slots 242 are configured to respectively receive the locking projections 242 on the respective top and bottom panels 235, 236. The central projection receiving slot 343 is configured to receive one of the locking projections 242 on the intermediate partition panel 237.

The retaining projections 348 on the intermediate partition panel 237 extends outwardly through decorative openings 276 of the respective end panels 232 to support opposite parallel lateral ends 286 of the intermediate partition panel 237. An additional support member 600 is releasably attached to each of the end panels 232 to support an expansive bottom surface 282 of the intermediate partition panel 237.

Each of the vertical partition walls 342 on the respective end panel 232 may include two or more central projection receiving slots 343 so that two or more intermediate partition panels 237 can be selectively positioned between the pair of laterally spaced, parallel end panels 232. Likewise, each of the horizontal partition walls 342 may have the identical construction as the continuous vertical partition wall 342, so that one or more vertical, intermediate partition panels can be selectively inserted or positioned between the pair of laterally spaced end panels 232.

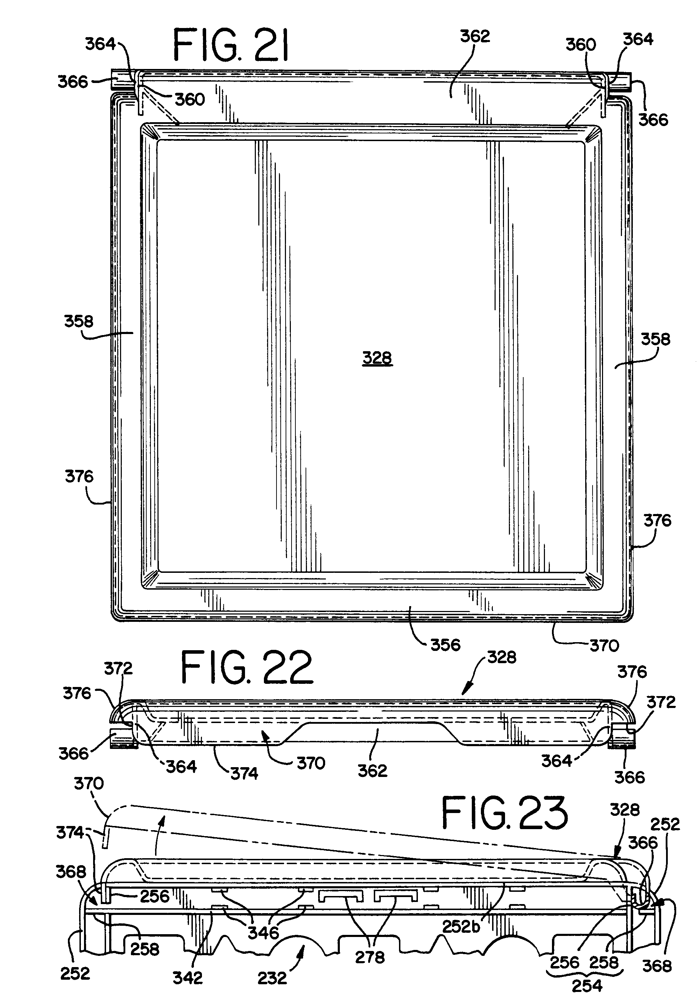

FIGURES 21 through 23 illustrate another embodiment of a top panel or a lid 328 which is positionable on top of a modular storage box 230 and attachable between the pair of the laterally spaced, parallel end panels 232. The lid 328 includes a front end 356 and opposite side ends 358. The lid 328 further includes a rear portion which has a corner 360 inwardly spaced from each of the opposite sides 358, and a rear end 362 extending between the opposite corners 360. A skirt is provided around a periphery of the lid 328 to extend downwardly from each of the front, side, corner and rear ends 356, 358, 362. A corner flange 364 has an integral resilient hinge sleeve 366 which extends outwardly therefrom substantially to an edge of the respective side skirt 376.

The integral hinge sleeve 366 has a semi-circular cross-section as best seen in FIGURE 22 and is sized to resiliently fit into a receiving slot 368 defined by each corner arrangement 254 and the peripheral flange 252. Accordingly, the lid 328 is hingedly connected or attached between the pair of laterally spaced, parallel end plates 232 by fitting the opposite integral hinge sleeves 366 into the laterally confronting corner arrangements 254 of respective end panels 232. The front end skirt 370 has opposite end cutouts 372 to define an insert skirt portion 374 therebetween. The insert skirt portion 374 is configured to be inserted into an assembled modular storage box configuration to extend along and outwardly of the vertical upright tab 256 of each corner arrangement 254. Each of the opposite side end skirts 376 is designed to have its skirt edge riding on an outside surface of the top peripheral flange 252b of respective end panel 232.

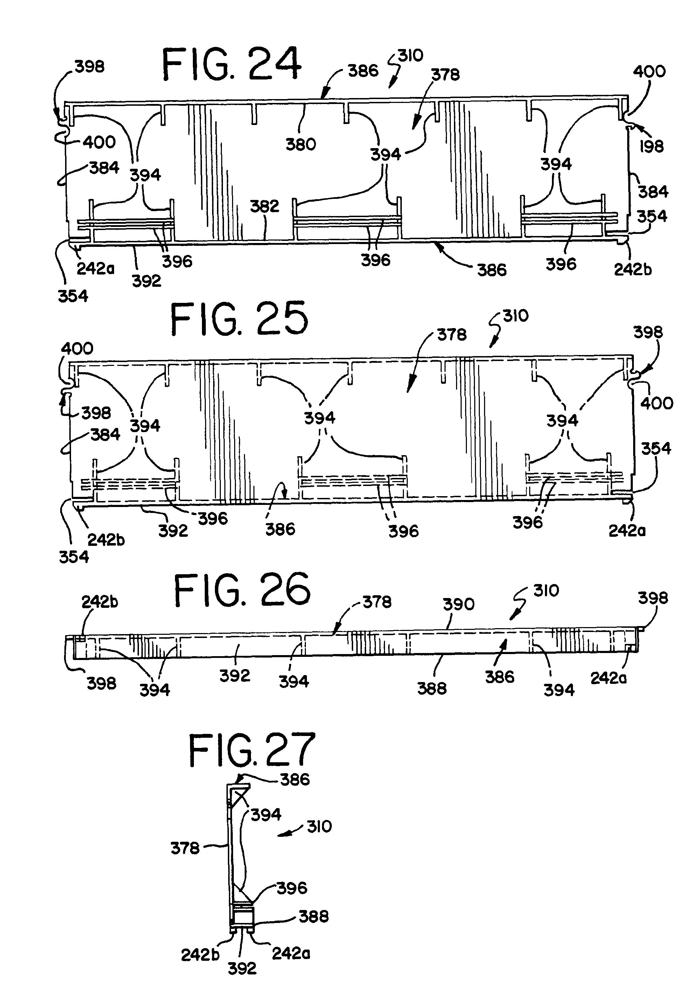

FIGURES 24 through 27 illustrate another embodiment of the kick panel 310 which is positionable and attachable between the pair of laterally spaced end panels 232. The kick panel 310 includes a generally rectangular, flexible plate 378 which has a top end 380, a bottom end 382 and opposite lateral ends 384. The kick panel 310 further includes an integral rim flange 386 at each of the top and bottom ends 380, 382 thereof. Each of the integral rim flange 386 has a distal end 388 to extend normally from one of opposite expansive surfaces of the flexible plate 378, and a proximal end 390 coterminous to the other of the opposite expansive surfaces of the flexible plate 378 to define a generally rectangular outside surface 392 therebetween. Similarly to the insert panel 32 of FIGURE 14, the kick panel 310 of this embodiment includes the distal locking projection 242a and the proximal locking projection 242b on the outside surface 392 of each integral rim flange 386, and a slit 354 in the flexible plate 378 to extend adjacent each of the locking projections 242a, 242b.

A retaining projection 398 and a recess 400 adjacent to each other are disposed at each lateral end 384 of the flexible plate 378. The retaining projection 398 at one of the lateral ends 384 is laterally aligned with the recess 400 at the other of the lateral ends 384 of the flexible plate 378. Each of the retaining projection 398 may be dimensioned to be not greater that a half length of the receiving slot 346 in the end panel 232.

A rigidifying element is provided on the one of the opposite expansive surfaces of the flexible plate 378 to provide the kick panel 310 with suitable rigidity. In this embodiment, a plurality of laterally spaced vertical rigidifying ridges 394 integrally depend downwardly from the top integral rim flange 386 and upwardly from the bottom integral rim flange 386, respectively. Additionally, a plurality of horizontal rigidifying ridges 396 are provided to extend laterally between the laterally adjacent vertical rigidifying ridges 394 as seen from FIGURE 24.

As will be appreciated from the foregoing description as to the attachment of the insert panel 234 to the end panel 232 with reference to FIGURES 16 and 18, the proximal and distal locking projections 388, 390 on the kick panel 310 are respectively lockingly fitted into the projection receiving slots 244 of the horizontal uprighttabs 258 on respective end panels 232 laterally spaced from each other. Each of the retaining projection 398 on the kick panel 310 is inserted into one of the receiving slots 346 in one of the vertically extending side marginal portion 260 on the end panel 232. As a result of attachment, each lateral end of the kick panel 110 is lockingly placed on the side marginal portion 260, and is retained in the retaining channel 344 defined between the retaining ridge 342 and the peripheral flange 252.

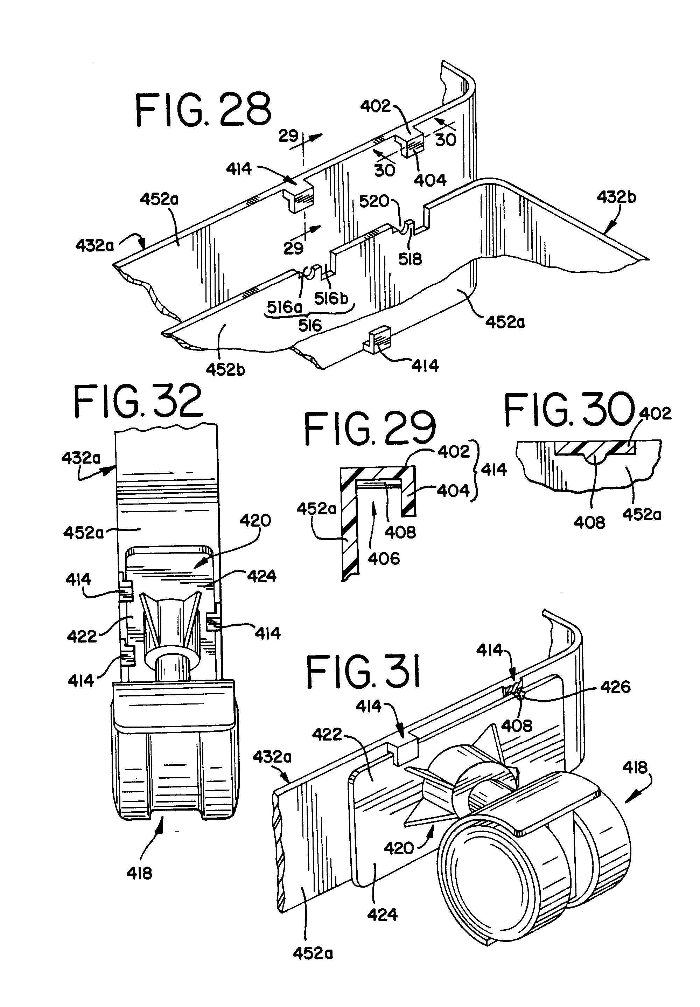

FIGURE 28 is an enlarged view illustrating the stacking projections 414 (three shown) on an upper end panel 432a, and the respective receiving slots 516 (only two shown) on a lower end panel 432b. FIGURES 29 and 30 are cross-sectional views taken along lines 28-28 and 29-29 of FIGURE 28, respectively. As can be seen from the drawings, each of the stacking projections 414 has a L-shaped cross-section. It includes a transverse member 402 which projects perpendicularly from the bottom peripheral flange 452a of the upper end panel 432a, and a parallel member 404 which extends parallel to the bottom peripheral flange 452a from the free end of the transverse member402 to define a receiving channel 406 between the stacking projection 414 and the bottom peripheral flange 452a. The receiving channel 406 receives therein the top peripheral flange 452b of the adjacent lower end panel 432b. An integral locking rib 408 is integrally formed with the transverse member 402 to vertically extend therealong.

Each of the receiving slots 516 is formed in the top peripheral flange 452b, and comprises a horizontally-extending first slot portion 516a, and a horizontally-extending second slot portion 516b which is continuously formed and deeper than the first slot portion 516a to define therebetween a tab portion 518. In the illustrated particular embodiment, the first slot portion 516a is dimensioned to have a width substantially equal to the width of the stacking projection 414, and a depth substantially equal to a thickness of the transverse member 402 of the stacking projection 414. The tab portion 518 has a recess thereon to define a rib receiving slot 520 for lockingly receiving the locking rib 408 on the transverse member 402 of the stacking projection 414. The second slot portion 516b is dimensioned to have a width greater than the width of the parallel member 404 of the stacking projection 414, so that the stacking projection 414 can be vertically inserted through the second slot portion 516b.

Although the tab portion 518 is illustrated as having a rib receiving slot 520, the tab portion 518 alternatively may have an integral locking rib 408 thereon which is configured to be lockingly received by the rib receiving slot 520 on the transverse member 402 of the stacking projection 414.

A typical stacking procedure to combine two end panels is now explained with reference to FIGURE 28. An upper end panel 432a is positioned with respect to a lower end panel 432b such that each of the stacking projections 414 on the upper end panel 432a can be vertically inserted through the respective second slot portion 516b on the lower end panel 432b, and the receiving channel 406 of each stacking projection 414 is generally horizontally aligned with the respective tab portion 518 of the lower end panel 432b. The upper and lower end panels 432a, 432b are then moved relative to each other so the receiving channel 406 of each stacking projection 414 on the upper end panel 432a slidably receives the respective tab portion 518 on the lower end panel 432b. The integral rib 408 on each stacking projection 414 is received by the respective rib receiving slot 520 on the lower end panel 432b, so that the upper and lower end panels 432a, 432b are locked together.

FIGURES 31 and 32 illustrate another embodiment of the caster bracket 118 as shown in FIGURE 9. A caster bracket 418 in this particular embodiment has a plate member 420 dimensioned to have a lateral length L which corresponds to a lateral distance between the laterally spaced stacking projections 414, so that opposite lateral end portions 422, 424 of the plate member 420 slidably fit into respective receiving channels 406 of the stacking projections 414. The plate member 420 has a plurality of rib receiving slots 426 for lockingly receiving respective locking ribs 408 of the stacking projections 414.

Any elements, such as the end panel 32, 232 and the insert panel 34, 234 of the modular storage box 30, 230 in accordance with the present invention may be molded from a polymeric material, such as styrene or polypropylene.

From the foregoing, it will be observed that numerous modifications and corrections can be effected without departing from the true spirit and scope of the novel concept of the present invention. It will be understood that no limitation with respect to the specific embodiments illustrated herein is intended or should be inferred. It is, of course, intended to cover by the appended claims all such modifications as fall within the scope of the claims.

## Claims

1. A connectable modular unit comprising:
a first component (32, 232, 432) having an inwardly facing expansive surface (46, 246), said first component including a pair of partitions (56, 58,256,258) intersecting said expansive surface (46, 246), with said partitions (56, 58, 256, 258) being arranged in spaced-apart confronting relationship to each other;
a second component (34, 234) having a side edge portion (90, 290) positionable between said partitions; and
a plurality of locking elements (40) for attaching said first component (32, 232) to said second component (34, 234), each of said locking elements (40) comprising a locking projection (42, 242) disposed on either said first or second component and a projection receiving slot (44, 244) disposed on the other of said first and second components for releasably and lockingly receiving said locking projection (42, 242).

2. The modular unit of claim 1, wherein said locking projection (42, 242) is disposed on said side edge portion of the second component (34, 234), and said projection receiving slot (44, 244) is disposed on the respective partiton of the first component (32, 232).

3. The modular unit of claim 2, further comprising:
a second pair of partitions (58, 56) on said first component (32) respectively intersecting said expansive surface (46) and extending transversely to said first pair of partitions (56, 58), and arranged in spaced-apart confronting relationship to each other so that the side edge portion of the second component (34) is selectively positionable between the second pair of partitions (58, 56), and
each of said second partitions (58, 56) including a second projection receiving slot (44) for releasably and lockingly receiving said locking projection (42) on said side edge portion of the second component (34) positioned therebetween.

4. The modular unit of claims 1 and 2, wherein each of said partitions (56, 58) has an extended length and includes a plurality of projection receiving slots (44) at intervals along the length thereof for selectively receiving a locking projection (42) on the second component (34).

5. The modular unit of claim 1, wherein
the connectable modular unit is a modular storage unit (30, 232);
the first component (32) is an end panel and the second component (34) is an insert panel, said modular storage unit including:
a pair of said end panels (32) oriented parallel to and spaced from each other, with the expansive surface (46) on each end panel (32) facing inwardly;
said insert panel (34) being positionable between said end panels (32) and having plural opposite side edge portions each positionable between said pair of partitions on a respective one of said end panels (32); said plurality of locking elements (40) adapted for attaching said insert panel (34) between said pair of end panels (32).

6. The storage unit of claim 5, further comprising:
a second insert panel (34) positionable between said end panels (32) having opposite side edge portions each positionable between said pair of partitions (56) on a respective one of said end panels (32), and
a plurality of second locking elements (40) for attaching said second insert panel (34) between said pair of end panels (32), each of said second locking elements (40) comprising a second locking projection (42b) disposed on either said second insert panel (34) or said end panels (32) and a second projection receiving slot (44) disposed on the other of said second insert panel (34) and said end panels (32) for releasably and lockingly receiving said second locking projection (42b).

7. The storage unit of claim 5, further comprising:
a second pair of partitions (58) on each of said end panels (32) respectively intersecting said expansive surface (46) of the end panel (32) and extending transverse to said first pair of partitions (56), and arranged in spaced-apart confronting relationship to each other,
a second insert panel (34) having opposite side edge portions each positionable between said second pair of partitions (58) on the respective end panel (32), and a plurality of second locking elements (40) for attaching said second insert panel (34) between said pair of end panels (32), each of said second locking elements (40) comprising a second locking projection (42b) disposed on either said second insert panel (34) or said end panel (32) and a second projection receiving slot (44) disposed on the other of said second insert panel (34) and said end panel (32) for releasably and lockingly receiving said second locking projection (42b).

8. The storage unit of claim 5, wherein
each of said end panels (32) has a plurality of corners (50) and includes an integral corner arrangement (54, 354) disposed at each of said corners (50), each of said corner arrangements (54, 354) includes said pair of partitions (56, 58) intersecting said expansive surface (46) of said end panel (32) and arranged transverse to each other and in spaced-apart confronting relationship to a partition of an adjacent corner arrangement (54, 354) to define a side marginal portion (60) between said spaced-apart confronting partitions (56, 58); and
at least one insert panel (34) is positionable between said end panels (32), each of said insert panels (34) extending between respective side marginal portions (60) of said pair of end panels (32).

9. The storage unit of claim 8, wherein:
each said insert panel (34) has first and second opposite surfaces (82, 84), each of said locking elements (40) being configured for relasably locking each of said insert panels (34) to each of said end panels (32) in a selected orientation to position a selected one of said first and second surfaces (82, 84) of said insert panel (34) to face outwardly.

10. The storage unit of claim 8, wherein:
each of said corner arrangements (54) comprises a pair of upright tabs (56, 58) transverse to each other and extending upwardly from said expansive surface (46) of said end panel (32), said pair of upright tabs (56, 58) being spaced from each other in a perpendicular relationship;
each said locking projection (42) is disposed on said insert panel (34), and
each of said upright tabs (56, 58) has said projection receiving slot (44) for receiving said locking projection (42).

11. The storage unit of claim 5, wherein: said end panel (32) further includes a retaining channel (70, 74) along each of said side marginal portions (60) thereon for receiving a lateral end of said insert panel (34).

12. The storage unit of claim 8, further including a lid (328) having a laterally spaced, pair of integral hinge sleeves (366), each of said hinge sleeves (366) being configured to resiliently fit into a receiving slot (368) defined in each of said corner arrangements (354).

13. The storage unit of claim 5 or 8, including a plurality of said insert panels (34) positionable between said end panels (32).

14. The storage unit of claim 5 or 8, wherein: each of said end panels (32) has a second expansive surface (48) with the second expansive surface (48) of one of said end panels (32) being substantially identical to the inwardly facing expansive surface (46) of the other of said end panels (32).

15. The storage unit of claim 14, including:
an additional end panel (32) oriented parallel to and spaced from one of said pair of end panels (32) and substantially identical thereto; and
an additional insert panel (34) positionable between and connected to said additional end panel (32) and said one end panel (32) to define therewith an additional storage unit (30).

16. The storage unit of claim 5 or 8, wherein:
said pair of end panels (32) comprises a first pair of end panels (32); and including
an additional pair of end panels (32) disposed above and stacked on said first pair of end panels (32); and at least one additional insert panel (32) positionable between and connected to said additional pair of end panels (32) to define therewith an additional storage unit (30).

17. The storage unit of claims 5 or 8, wherein:
said modular storage unit (30) is stackable;
each of said end panels (32, 432) has a bottom end for defining a longitudinally extending, bottom end surface (52a, 452a);
a set of laterally spaced projections (114, 414) on said bottom end surface (52a), each of said projections (114,414) having an inner surface for defining a longitudinally extending, and laterally inwardly opening receiving channel (406); and including a second pair of laterally spaced, parallel end panels (32, 432), each of said end panels having a top end for defining a longitudinally extending, top end surface (52a, 452a), said top end surface (52a, 452a) having a set of slots (116) respectively extending laterally inwardly from opposite lateral edges of the top end surface (52a) for defining a set of laterally spaced insertion portions, said insertion portions respectively configured to slidably fit into said receiving channels (406), so that said first pair of end panels are respectively stacked onto said second pair of end panels, with said top end surfaces (52a, 452a) of the first pair of end panels respectively being in abutment contacts with said bottom end surfaces (52b, 452b) of the second pair of end panels; and said at least one insert panel (34) being positionable to extend laterally between at least one of said first or second sets of end panels.

18. The storage unit of claim 17, further comprising a locking element (122,408, 518) for lockingly attaching each of said first set of end panels to respective one of said second set of end panels.

19. The storage unit of claim 18, wherein
said locking element comprises a locking rib (408) on the inner surface of one of the projection (414) and said respective insertion portion, and a rib receiving slot (520) on the inner surface of the other of the projection (414) and said insertion portion for lockingly receiving said locking rib (408);
said locking rib (408) is disposed on said inner surface of the projection (414), and said rib receiving slot (520) is disposed on said insertion portion.

20. The storage unit of claim 17, wherein
each of said set of slots (516) on the top end surface (452b) comprises a first slot portion (516a), and a second slot portion (516b) continuously formed with and deeper than said first slot portion (516a) for defining said insertion portion therebetween;
said second slot portion (516b) is dimensioned so that the respective projection (414) can be inserted therethrough; and
said insertion portion on the top end surface (452b) has a recess (520) for lockingly receiving a locking rib (408) disposed on the inner surface of the respective projection (414).

21. The storage unit of claim 17, wherein said top and bottom end surfaces (452) of the respective end panels have substantially the same lateral dimension.

22. The storage unit of claim 17, wherein
each of said second pair of end panels further has a bottom end for defining a longitudinally extending, second bottom end surface (452a), said second bottom end surface having a second set of laterally spaced projections (414), each of said projections having an inner surface for defining a longitudinally extending, and laterally inwardly opening receiving channel (406), and said modu- larstorage unit further comprising a caster bracket (418) having a plate member (420), said plate member having opposite lateral end portions (422, 424) for respectively slidably fit into the receiving channels (406); and
one of said lateral end portions (422, 424) of the plate member (420) has a rib receiving slot (426) for lockingly receiving a locking rib (408) disposed on the inner surface of the respective projection (414).

23. The storage unit of claims 5 or 8, wherein:
said modular storage unit (30) is stackable; each of said end panels (432) has a side end defining a longitudinally extending, first end surface (452a);
a set of laterally spaced projections (414) on said first end surface (452a), each of said projections (414) having an inner surface for defining a longitudinally extending, and laterally inwardly opening receiving channel (406);
each of said end panels (432) has a side end defining a longitudinally extending, second end surface (452b), said second end surface having a set of slots (516) respectively extending laterally inwardly from opposite lateral edges of the second end surface (452b) for defining a set of laterally spaced insertion portions, said insertion portions respectively configured to slidably fit into the respective receiving channels (406), so that said first and second components are attached to each other, with said first end surface (452a) of the first component being in abutment contact with said second end surface (452b) of the second component.

24. The modular unit of claim 23, wherein
each of said slot (516) on an end panel comprises a first slot portion (516a), and a second slot portion (516b) continuously formed with and deeper than said first slot portion for defining said insertion portion therebetween; and
said insertion portion has a rib receiving slot (520) for lockingly receiving a locking rib (408) disposed on said inner surface of the respective projection (414).
